# EUROPEAN PATENT APPLICATION

(11) **EP 4 618 369 A1**
(43) Date of publication of application: **17.09.2025**
(21) Application number: 23894788.1
(22) Date of filing: 26.09.2023
(51) Int. Cl.: H02J 9/00, H02M 1/00

(54) **POWER SUPPLY DEVICE**

(30) Priority: 22.11.2022 KR 20220157604
(71) Applicant: LG Electronics Inc., Yeongdeungpo-gu Seoul 07336 (KR)
(72) Inventor: LEE, Joobyung, Seoul 06772 (KR); HWANG, Byeongseon, Seoul 06772 (KR)
(74) Representative: Schornack, Oliver
(86) International application number: PCT/KR2023/014896
(87) International publication number: WO 2024/111858

(57) **Abstract**

The present invention relates to a power supply device. A power supply device according to one embodiment of the present invention is characterized by comprising: a power supply unit which receives AC power and supplies a constant voltage to a relay, and when the relay turns on on the basis of the supply of the constant voltage, operates a power IC to supply power to the outside; an on-off switch control unit which receives an on signal from the outside in a standby mode in which power is not supplied to the outside; and a standby mode control unit which supplies a constant voltage so that the relay turns on in the standby mode on the basis of the on signal, wherein the standby mode control unit is formed so that power consumption in the standby mode is less than or equal to a predetermined number of Watts.

## Description

### Technical Field

The present disclosure relates to a power supply device, and more particularly, to a power supply device that can minimize power consumption in a standby mode.

### Background Art

In general, various types of electronic products such as a TV, a refrigerator, a computer, a printer, a copier, and the like are used in each home or office.

Most users use various electronic products by connecting them to an electrical outlet, but the electronic products have a problem with so-called standby power consumption, which consumes a large amount of electricity in a standby state even when not in use, and even if this standby power is blocked, a lot of energy can be saved annually.

However, in the past, there was no device that allowed users to easily cut off standby power, so users had no choice but to rely on the act of unplugging electronic products to cut off standby power, and for this reason, there has been a problem in that standby power blocking cannot be widely implemented due to the inconvenience of users having to unplug multiple electronic products one by one.

Recently, various studies are being carried out to minimize the standby power (power consumption in a standby mode). However, patents developed so far have a problem in that additional components, materials, and circuit configurations become complicated by using a separate battery or having a separate microcomputer to turn power output on/off through a deep burst switching operation in a standby mode.

### Disclosure of Invention

### Technical Problem

The present disclosure is intended to solve the foregoing problems, and an aspect of the present disclosure is to provide a power supply device that can minimize standby power by lowering power consumption to 0.00 W in a standby mode.

Another aspect of the present disclosure is to provide a power supply device that can minimize power consumption while minimizing additional components.

### Solution to Problem

In order to achieve the foregoing objectives, a power supply device according to one embodiment of the present disclosure may include a power supply unit that receives AC power, supplies a constant voltage to a relay, and operates, when the relay is turned on based on the supply of the constant voltage, a power IC to supply power to the outside, an on-off switch control unit that receives an on signal from the outside in a standby mode in which power is not supplied to the outside, and a standby mode control unit that supplies a constant voltage to turn on the relay in the standby mode based on the on signal, wherein the standby mode control unit is configured so as to allow power consumption in the standby mode to be below a predetermined wattage.

In an embodiment, the standby mode control unit may include a standby mode IC, and a first capacitor connected to a collector terminal of the standby mode IC.

In an embodiment, the first capacitor may be charged when power is supplied to the collector terminal of the standby mode IC.

In an embodiment, the on/off switch control unit may include a second capacitor that supplies power to a signal line to detect the on signal.

In an embodiment, the on/off switch control unit may further include a photocoupler that inputs a high pulse signal to the standby mode IC when the on signal is received.

In an embodiment, the standby mode control unit may further include a third capacitor connected to the standby mode IC, wherein the standby mode IC turns on the relay for a predetermined period of time to switch a standby mode to a power supply mode based on power charged in the third capacitor falling below a preset value so as to charge the first capacitor and the third capacitor.

In an embodiment, a capacitance of the first capacitor may be greater than that of the third capacitor.

In an embodiment, the on/off switch control unit may include a second capacitor that supplies power to a signal line to detect the on signal, wherein the second capacitor is charged for the predetermined period of time when the power charged in the third capacitor falls below a preset value.

In an embodiment, a capacitance of the second capacitor may be greater than that of the third capacitor.

In an embodiment, the predetermined period of time may be a period of time set so as to allow power consumption in the standby mode to be below the predetermined wattage.

### Advantageous Effects of Invention

According to the present disclosure, the present disclosure may minimize standby power to be close to 0 W by lowering power consumption to 0.00 W without disconnecting a power cord in a standby mode.

In addition, the present disclosure may implement 0.00 W technology without using a battery, an AC cut-off switch, or a separate microcomputer, and reduce material costs and simplify the circuit by utilizing the charging of a capacitor generally applied to a power supply device.

### Brief Description of Drawings

FIG. 1 is a conceptual diagram for explaining a form in which a power supply device according to one embodiment of the present disclosure is implemented.
FIG. 2 is a circuit diagram for explaining a circuit of a power supply device according to one embodiment of the present disclosure.
FIG. 3 is a circuit diagram for explaining a relay applicable to a circuit of a power supply device in another embodiment of the present disclosure.
FIG. 4 is a flowchart for explaining a method of controlling a power supply device according to one embodiment of the present disclosure.
FIGS. 5 and 6 are conceptual diagrams for explaining standby power and actual sizes of components when applying a power supply device according to the present disclosure.

### Mode for the Invention

Hereinafter, embodiments disclosed herein will be described in detail with reference to the accompanying drawings, and the same or similar elements are designated with the same reference numerals regardless of the drawing numerals and redundant description thereof will be omitted. A suffix "module" or "unit" used for elements disclosed in the following description is merely intended for easy description of the specification, and the suffix itself is not intended to give any special meaning or function. In describing embodiments disclosed herein, moreover, the detailed description will be omitted when specific description for publicly known technologies to which the disclosure pertains is determined to obscure the gist of the present disclosure. Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure.

The terms including an ordinal number such as first, second, and the like may be used to describe various elements, but the elements should not be limited by those terms. The terms are used merely for the purpose to distinguish one element from another element.

It should be understood that when an element is referred to as being "connected to" or "coupled to" another element, the element may be directly connected to or coupled to the other element or intervening elements may also be present. On the contrary, it should be understood that when an element is referred to being "directly connected" or "directly coupled" to another element, there are no intervening elements present.

A singular representation may include a plural representation, unless the context clearly indicates otherwise.

The terms "include" or "have" used herein should be understood that they are intended to indicate the presence of a feature, a number, a step, an operation, an element, a component or a combination thereof disclosed in the specification, and it may also be understood that the presence or additional possibility of one or more other features, numbers, steps, operations, elements, components or combinations thereof are not excluded in advance.

A power supply device described herein will be applied to all types of electronic devices, including fixed terminals such as a digital TV, a desktop computer, and a digital signage.

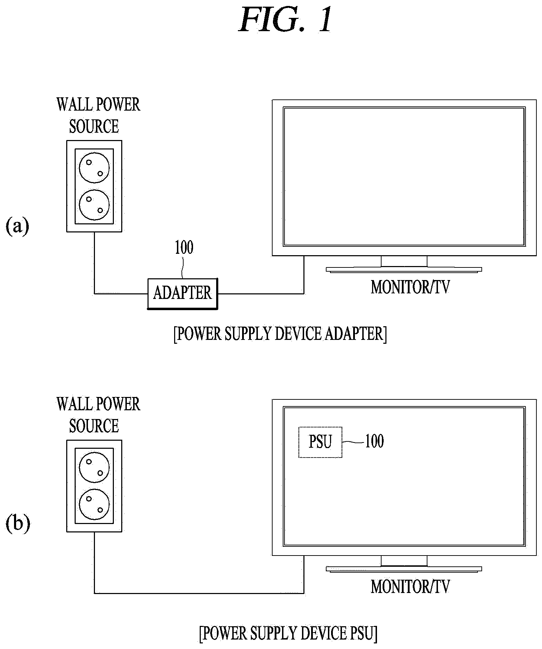

FIG. 1 is a conceptual diagram for explaining a form in which a power supply device according to one embodiment of the present disclosure is implemented.

A power supply device of the present disclosure may be applied to all types of electronic devices that receive power from a wall power source that supplies AC power, and may be applied not only to a case where AC power is constantly received, but also to a charging device that charges a mobile terminal or the like.

As shown in (a) of FIG. 1, a power supply device 100 of the present disclosure may be implemented in a form of an adapter, or as shown in (b) of FIG. 1, may be implemented in a form of a power supply unit (PSU) included in an electronic device.

Hereinafter, a power supply device described herein will be implemented in a form of a power supply circuit so as to be provided in a power supply device. Accordingly, herein, the terms power supply device, power supply circuit, or circuit of the power supply device are used interchangeably.

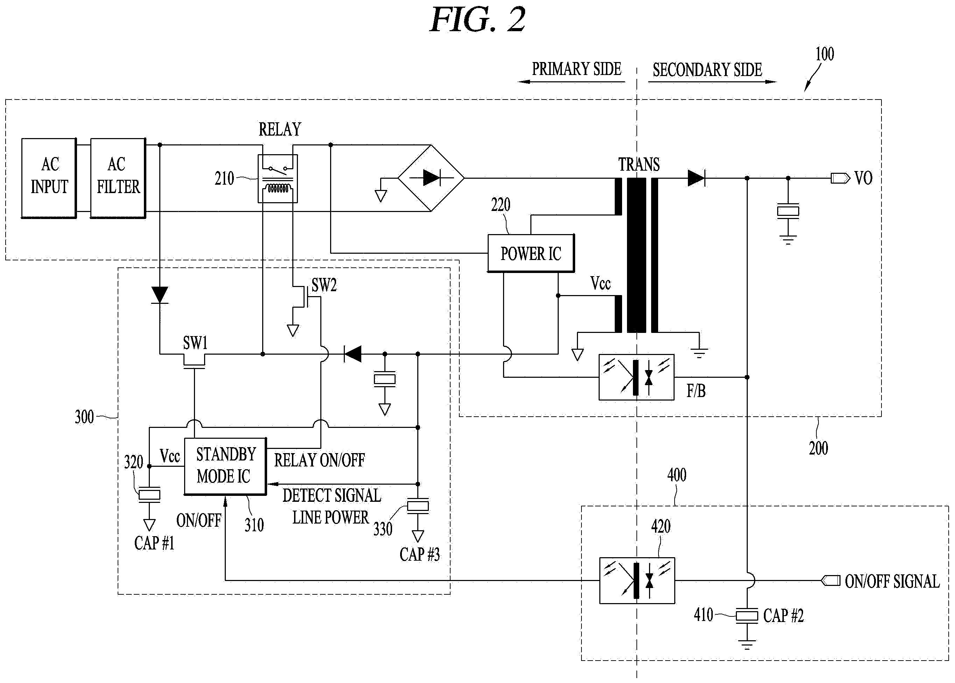

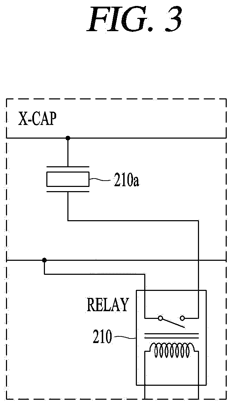

FIG. 2 is a circuit diagram for explaining a circuit of a power supply device according to one embodiment of the present disclosure, and FIG. 3 is a circuit diagram for explaining a relay applicable to a circuit of a power supply device according to another embodiment of the present disclosure.

The power supply device (or circuit of the power supply device) 100 of the present disclosure may include a power supply unit 200 that receives AC power AC INPUT and supplies a constant voltage to a relay 210, and operates, when the relay is turned on based on the supply of the constant voltage, a power IC 220 to supply power VO to the outside, an on-off switch control unit 400 that receives an on signal from the outside in a standby mode in which power is not supplied to the outside, and a standby mode control unit 300 that supplies a constant voltage to turn on the relay in the standby mode based on the on signal.

The relay 210 may be directly connected to an AC live terminal, as shown in FIG. 2, or may be connected together with an X-Cap 210a, as shown in FIG. 3.

The standby mode control unit 300 may be configured so as to allow power consumption in a standby mode to be below a predetermined wattage. Here, the predetermined wattage is a wattage that serves as a reference (specification) that allow standby power to be expressed as 0 W, and may be, for example, 0.005 W. The predetermined wattage may be a reference that can indicate standby power as 0 W, and thus may be varied by a user.

When the reference (specification) that can indicate standby power as 0 W is 0.005 W, and the standby power is below 0.005 W, a product may explicitly indicate that standby power is 0 W.

The standby mode control unit 300 may include a standby mode IC 310 (or 0.00 W control unit) and a first capacitor (CAP#1) 320 connected to a collector terminal (a portion to which Vcc is supplied) of the standby mode IC.

The first capacitor 320 may be disposed to be charged when power Vcc is supplied to the collector terminal of the standby mode IC.

Specifically, when AC power (specifically, AC half-wave rectified power) is input, a first switch SW1 is turned on, and when a constant voltage is supplied to the relay 210 to turn on the relay, the power IC 220 may be operated.

When the power IC 220 is operated, the power supply device may enter a power supply mode (or power mode) that turns on power, and supply power from a primary side to a secondary side to supply power VO to the outside.

In the power supply mode in which the power IC operates, the first capacitor 320 provided in the standby mode control unit may be charged.

Meanwhile, the on/off switch control unit 400 may include a second capacitor (CAP#2) 410 that supplies power to a signal line to detect an on signal (or on/off signal).

The on signal may be received when a power button connected to a main board is pressed or when a power button on a remote control device (or remote control) is pressed.

In order to always detect the on signal, the second capacitor 410 may serve as signal line power.

The second capacitor may be charged when power is output from a primary side to a secondary side by the power IC 220 in a power supply mode (or power mode).

The on/off switch control unit 400 may further include a photocoupler 420 that inputs a high pulse signal to the standby mode IC 310 when the on signal is received.

Specifically, when an on signal (on/off signal) is transmitted based on pressing the power button of the main board or the power button of the remote control device (remote control), a signal may be input to a photodiode at an input terminal of the photocoupler 420. When the photodiode of the photocoupler is turned on, it is converted into a high-pulse signal and input to the standby mode IC 310.

In this case, the standby mode IC 310 may turn on a second switch SW2 to turn on the relay 210, and switch the standby mode to the power supply mode.

The second capacitor 410 may be charged based on power being supplied to the secondary side as being switched to the power supply mode.

Meanwhile, referring to FIG. 2, the standby mode control unit 300 further includes a third capacitor (CAP#3) 330 connected to the standby mode IC 310.

The standby mode IC 310 may charge the first capacitor 320 and the third capacitor 330 by turning on the relay 210 for a predetermined period of time to switch the standby mode to the power supply mode based on power charged in the third capacitor 330 falling below a preset value.

Here, the third capacitor 330 may serve as a sensor to prevent power charged in the first and second capacitors 320, 410 from being exhausted.

To this end, a capacitance of the first capacitor 320 may be formed to be greater than that of the third capacitor 330 (or, a capacitance obtained by subtracting the preset value from a total capacitance of the third capacitor).

Additionally, the second capacitor 410 serves to supply power to a signal line to detect an on signal. In addition, in order to prevent the second capacitor 410 from being discharged, a capacitance of the second capacitor 410 may be greater than that of the third capacitor 330 (or, a capacitance obtained by subtracting the preset value from a total capacitance of the third capacitor).

The third capacitor 330 may be formed to be charged in the power supply mode, as described above.

The predetermined period of time is a period of time formed so as to allow power to be charged to the first to third capacitors, and may be set to a very short period of time.

Additionally, the predetermined period of time may be a period of time set short enough so as not to allow power consumption in a standby mode to exceed a predetermined wattage (a wattage of a magnitude specified so as to be expressed as 0.00 W as described above).

The predetermined period of time may be set as a period of time required to charge the first to third capacitors, and may be varied by the user. Additionally, the predetermined period of time may refer to a period of time it takes to switch from a state of the standby mode to the power supply mode for a moment and then back to the standby mode.

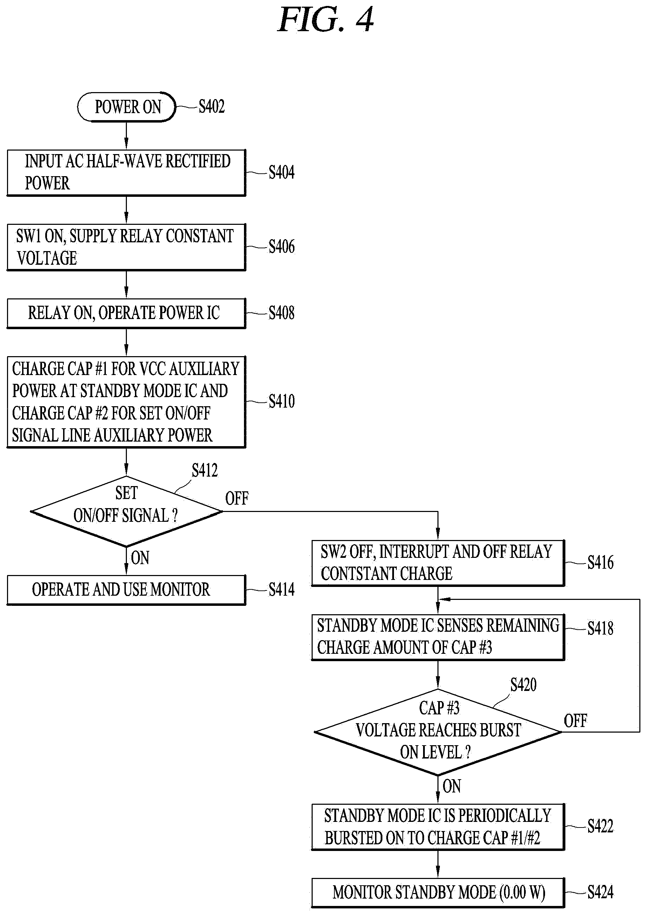

FIG. 4 is a flowchart for explaining a method of controlling a power supply device according to one embodiment of the present disclosure.

First, when the power supply device 100 is powered on (S402), AC half-wave rectified power is input (S404), and when the first switch SW1 is turned on, a constant voltage is supplied to the relay 210 (S406).

Accordingly, when the relay 210 is turned on, the power IC 220 operates to enter the power supply mode (S408). In this case, the power supply device 100 supplies power to the outside by supplying power from a primary side to a secondary side.

In the power supply mode, the first capacitor (CAP# 1) for auxiliary power provided in the collector terminal (Vcc) of the standby mode IC is charged, and the second capacitor (CAP#2) provided in an on/off signal line is also charged (S410).

In a state where an on signal that operates the power supply device is received (S412), an electronic device (e.g., a monitor) supplied with power from the power supply device may be operated and used (S414).

Meanwhile, when an off signal is received from the power supply device (S412), the second switch SW2 may be turned off, the supply of the constant voltage to the relay 210 is cut off to turn off the relay 210 (S416).

In this case, the power supply device enters the standby mode from the power supply mode.

In the standby mode, the standby mode IC 310 may sense a remaining charge amount of the third capacitor 330 (S418).

When the remaining charge amount of the third capacitor 330 reaches a burst on level (i.e., falls below a preset value) (S420), the standby mode IC 310 may temporarily (for a predetermined period of time) switch the standby mode to the power supply mode in order to charge the first and second capacitors (S422).

When the power IC 220 supplies power by switching to the power supply mode for the predetermined period of time, the first capacitor and the third capacitor may be charged by power at a primary side, and the second capacitor may be charged by power at a secondary side.

Then, the standby mode IC 310 may be controlled to turn off the relay to enter the standby mode again (S424).

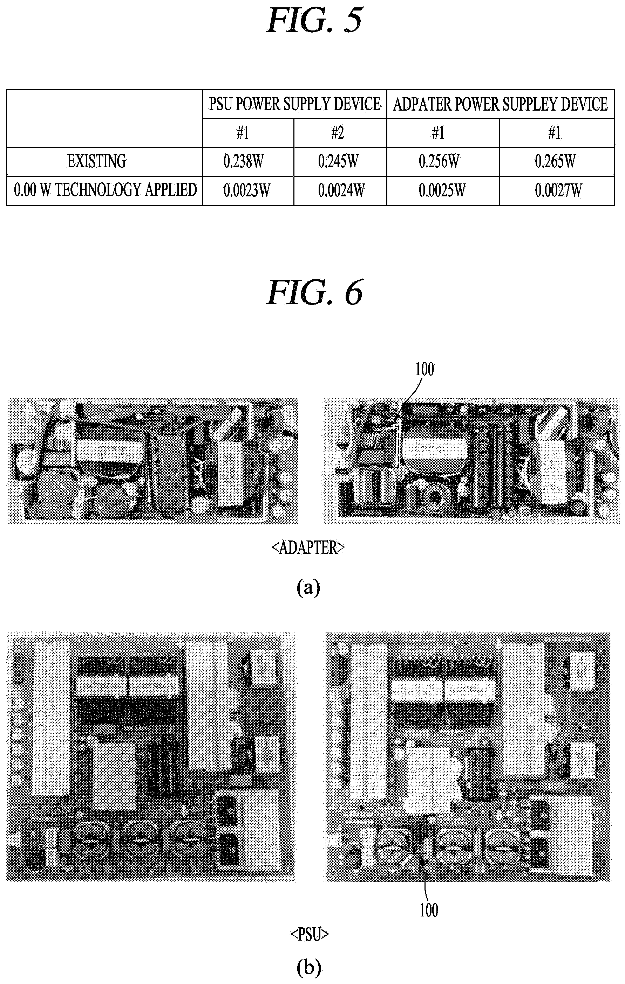

FIGS. 5 and 6 are conceptual diagrams for explaining standby power and actual sizes of components when applying a power supply device according to the present disclosure.

Referring to FIG. 5, when the circuit of the power supply device of the present disclosure is applied, the standby power may be reduced to approximately 1/100 compared to the existing technology, and the standby power may be reduced to a level where the standby power may be specified as 0.00 W according to North American/European/Korean standards.

FIG. 5 is a table showing accumulated measurement values of standby power at 230 Vac/50 Hz for 10 minutes.

Referring to FIG. 6, the circuit 100 of the power supply device of the present disclosure adds only three simple capacitor components, so no special components such as separate batteries or switches are required, and thus it can be seen that a size and area of the power supply device are quite similar to those of the existing devices.

To summarize the above, the power supply device of the present disclosure may include an AC input disconnection relay for interrupting an output of the power supply device in order to implement a standby mode power consumption of 0.00 W.

In addition, since the power supply device requires power to supply to the standby mode control unit that turns the relay on/off while an output of the power unit is interrupted, a first capacitor (CAP#1) may be connected to a Vcc output line of the power supply device, and power may be supplied to the standby mode control unit with the power charged in the first capacitor (CAP#1).

The present disclosure supplies power to the standby mode control unit while an output of the power supply device is turned off, and thus typical capacitors made of electrolytic/polymer materials are used instead of applying high-cost components such as batteries that have been previously used.

In addition, the present disclosure requires a control switch and a power supply to the power supply device to transmit, receive, and control an on/off signal of a product main board or an on/off signal of the remote control device.

To this end, the power supply device of the present disclosure may connect the second capacitor (CAP#2) to a SET on/off signal receiving line located at a secondary side of the power supply device, and transmit an on/off signal to the standby mode control unit of the power supply device with power charged in the second capacitor.(

In addition, the present disclosure may require a charging component to supply power required for the first and second capacitors, and include the third capacitor that senses a state of charge amount and supplies power only when the power is insufficient to charge the component with minimal power consumption.

That is, the present disclosure may connect the third capacitor (CAP#3) to a detect pin of the standby mode control unit IC to charge the first and second capacitors for power supply with minimal power consumption, sense a charge amount of the third capacitor, and turn on, only when it is below a predetermined level, an output of the power supply device so as to charge the first to third capacitors.

Through this, a power requirement amount required for the standby mode control unit may be simply sensed by a remaining discharged amount of the typical capacitor (third capacitor) to supply only a minimum current, without the need for a high-cost circuit such as a microcomputer.

In addition, the present disclosure must transmit an on/off signal at a secondary side from a product remote control and a control key to the standby mode control unit of the power supply device (a primary side of the power unit), and may apply a photocoupler to an on/off signal receiving line of a product to convert and transmit a high/low voltage signal that can be recognized by a power supply device so as to satisfy power supply insulation and standard regulations.

Through this, the present disclosure may transmit the on/off signal of the product to the standby mode control unit at a primary side of the power supply device without a separate standard/insulating component.

When the power supply device of the present disclosure is powered on, an operation of a power supply device circuit may be carried out in a sequence of ① inputting AC half-wave rectified power, ② turning on SW1, ③ supplying a constant voltage to a relay to turn on the relay, and ④ operating a power IC.

When the power supply device of the present disclosure is powered on, an operation of charging capacitors for auxiliary power may be carried out in a sequence of ⑤ charging a first capacitor (Cap #1) for auxiliary power when Vcc of a standby mode IC (0.00 W control unit IC) is supplied, and ⑥ charging a second capacitor (Cap #2) for SET on/off signal line auxiliary power when a secondary output of the power unit is supplied.

In the power supply device of the present disclosure, during power-off in a standby mode, an operation of the standby mode IC (0.00 W control unit) may be carried out in a sequence of ⑤ supplying Vcc auxiliary power to the standby mode IC with a voltage charged in the first capacitor (Cap #1), ⑥ supplying a voltage charged in the second capacitor (Cap #2) to signal line auxiliary power, ⑦ performing a power-on operation in a very short cycle once at a predetermined cycle in the standby mode IC to prevent power charged in Cap #1, Cap #2 from being discharged, and ⑧ allowing the standby mode IC to sense a remaining charge amount of a third capacitor (Cap #3) to determine a power-on burst operation cycle.

In the power supply device of the present disclosure, when receiving a SET on/off signal (remote control/control key), an operation process of transmitting it to the standby mode IC may include ⑨ inputting a signal to a photodiode at an input terminal of a photocoupler when an on/off signal is transmitted from a SET main board, and ⑩ converting, when the photodiode in the photocoupler is turned on, into a high-pulse signal to be input to the standby mode IC, and switching between a standby mode and a power supply mode (or an operation mode) through controlling the relay via the on/off control of SW2.

According to the present disclosure, the present disclosure may minimize standby power to be close to 0 W by lowering power consumption to 0.00 W without disconnecting a power cord in a standby mode.

In addition, the present disclosure may implement 0.00 W technology without using a battery, an AC cut-off switch, or a separate microcomputer, and reduce material costs and simplify the circuit by utilizing the charging of a capacitor generally applied to a power supply device.

While the preferred embodiments of the present disclosure have been shown and described above, it will be of course understood by those skilled in the art that various modifications may be made without departing from the gist of the disclosure as defined in the following claims, and it is to be noted that those modifications should not be understood individually from the technical concept and prospect of the present disclosure.

## Claims

1. A power supply device, the device comprising:
a power supply unit that receives AC power, supplies a constant voltage to a relay, and operates, when the relay is turned on based on the supply of the constant voltage, a power IC to supply power to the outside;
an on-off switch control unit that receives an on signal from the outside in a standby mode in which power is not supplied to the outside; and
a standby mode control unit that supplies a constant voltage to turn on the relay in the standby mode based on the on signal,
wherein the standby mode control unit is configured so as to allow power consumption in the standby mode to be below a predetermined wattage.

2. The device of claim 1, wherein the standby mode control unit comprises:
a standby mode IC; and
a first capacitor connected to a collector terminal of the standby mode IC.

3. The device of claim 2, wherein the first capacitor is charged when power is supplied to the collector terminal of the standby mode IC.

4. The device of claim 1, wherein the on/off switch control unit comprises:
a second capacitor that supplies power to a signal line to detect the on signal.

5. The device of claim 4, wherein the on/off switch control unit further comprises:
a photocoupler that inputs a high pulse signal to the standby mode IC when the on signal is received.

6. The device of claim 2, wherein the standby mode control unit further comprises:
a third capacitor connected to the standby mode IC, and
wherein the standby mode IC turns on the relay for a predetermined period of time to switch a standby mode to a power supply mode based on power charged in the third capacitor falling below a preset value so as to charge the first capacitor and the third capacitor.

7. The device of claim 6, wherein a capacitance of the first capacitor is greater than that of the third capacitor.

8. The device of claim 6, wherein the on/off switch control unit comprises:
a second capacitor that supplies power to a signal line to detect the on signal, and
wherein the second capacitor is charged for the predetermined period of time when the power charged in the third capacitor falls below a preset value.

9. The device of claim 8, wherein a capacitance of the second capacitor is greater than that of the third capacitor.

10. The device of claim 6, wherein the predetermined period of time is a period of time set so as to allow power consumption in the standby mode to be below the predetermined wattage.
